# EUROPEAN PATENT SPECIFICATION

(11) **EP 4 343 176 B1**
(45) Date of publication and mention of the grant of the patent: **12.11.2025**
(21) Application number: 23198148.1
(22) Date of filing: 19.09.2023
(51) Int. Cl.: F16H 61/47, F16H 47/02, F16H 59/10, B60K 31/00, B60K 31/18, B60K 35/22, B60K 35/28

(54) **WORK VEHICLE**
ARBEITSFAHRZEUG
VÉHICULE DE TRAVAIL

(30) Priority: 20.09.2022 JP 2022148736
(43) Date of publication of application: 27.03.2024
(73) Proprietor: ISEKI & CO., LTD., Matsuyama-shi Ehime-ken 799-2692 (JP)
(72) Inventor: KAJINO, Yutaka, Ehime-ken, 791-2193 (JP); YAMANOUCHI, Ryosuke, Ehime-ken, 791-2193 (JP); ISHIMARU, Shuji, Ehime-ken, 791-2193 (JP)
(74) Representative: TBK

(56) References cited:
- JP-A- 2021 181 806
- US-A1- 2005 101 436

## Description

### BACKGROUND OF THE INVENTION

### 1. Field of the Invention

The present invention relates to a work vehicle such as an agricultural tractor.

### 2. Description of Related Art

The following work vehicle has been known. In the work vehicle including a continuously variable transmission and an actuator that controls a gearshift position of the continuously variable transmission, once the gearshift position is stored, the actuator automatically reproduces the stored position by operating a gearshift position reproduction switch even when the continuously variable transmission is subsequently operated to another gearshift position. Examples of the related art include JP 2008-298099 A and JP 2021- 181806 A.

### SUMMARY OF THE INVENTION

Such a configuration is convenient since the gearshift position can easily be reproduced even with the continuously variable transmission, whose gearshift position is difficult to be reproduced. However, since the transmission is controlled irrespective of a gearshift position of a gearshift operation lever, a driver may experience an unintended speed increase or reduction, which makes it difficult for the driver to comprehend states of a gearshift operation and travel control.

It is an object of the invention to provide a work vehicle that allows easy comprehension of states of a gearshift operation and travel control and thus can travel safely.

In order to solve the above object and achieve the purpose, the invention according to a first aspect is a work vehicle that includes: a transmission (41) that changes a gear stage on the basis of an operation of a gearshift operation tool (18, 23); and a memory switch (70) that detects an operation position of the gearshift operation tool (18, 23) and stores the operation position in a controller (100). The work vehicle is configured that, when the operation position is stored by using the memory switch (70), with respect to a vehicle speed, a gearshift operation of the gearshift operation tool (18, 23) to a higher-speed side than the operation position stored by using the memory switch (70) is disabled, and the gearshift operation of the gearshift operation tool (18, 23) to a lower-speed side than the operation position stored by using the memory switch (70) is enabled.

In the invention as in the first aspect, the invention according to a second aspect is configured that, in the case where the memory switch (70) is operated again in a state where the operation position is stored by using the memory switch (70), and a gearshift position of the gearshift operation tool (18, 23) is located at a lower-speed position than the stored operation position, the controller (100) inputs the gearshift position of the gearshift operation tool (18, 23) at this time and updates memory, and the controller (100) does not accept update of the memory when the gearshift position of the gearshift operation tool (18, 23) is located at a higher-speed position than the stored operation position.

In the invention as in the first or second aspect, the invention according to a third aspect is configured to: cancel the operation position, which is stored by using the memory switch (70), by an operation of a cancel switch (71); and keep the gearshift position of the gearshift operation tool (18, 23) at the operation position stored by using the memory switch (70) in the case where the gearshift position of the gearshift operation tool (18, 23) is located at the higher-speed position than the operation position stored by using the memory switch (70) during the operation of the cancel switch (71).

In the invention as in the first or second aspect, the invention according to a fourth aspect further has: an engine speed memory (90) that sets an engine speed; and a display section (110) that displays a set speed calculated from a set engine speed and the gearshift position of the gearshift operation tool (18, 23).

According to the invention as in the first aspect, the gearshift position is controlled at the operated position in a low-speed range, and is restricted at the stored gearshift position in a high-speed range. Thus, it is easy to comprehend a relationship between the operation position and reproduction of the stored gearshift position, which enables safe travel.

According to the invention as in the second aspect, in addition to the effect exerted by the first aspect, it is possible to avoid an unexpected speed increase caused by update of the memory and thus to travel safely.

According to the invention as in the third aspect, in addition to the effect exerted by the first or second aspect, even in the case where the gearshift operation tool (18, 23) is located at the high-speed position when the cancel switch (71) is operated, it is possible to avoid the unexpected speed increase and thus to travel safely.

According to the invention as in the fourth aspect, in addition to the effect exerted by the first or second aspect, since the set speed, which is calculated from the set engine speed and the gearshift position, is displayed, a driver can generate an appropriate work speed.

### BRIEF DESCRIPTION OF THE DRAWINGS

FIG. 1 is a left side view of a tractor according to an embodiment of the invention;
FIG. 2 is a plan view of the tractor in FIG. 1;
FIG. 3 is a power transmission line diagram of a power transmission apparatus in the tractor;
FIG. 4 is a schematic view illustrating a configuration and an operation state of a hydrostatic continuously variable transmission in the tractor;
FIG. 5 is a block diagram illustrating a configuration of a part of a control system in the tractor;
FIG. 6 is a schematic explanatory view illustrating an operation of a primary gearshift lever in the tractor;
FIG. 7 is a plan view of an armrest and an operation panel in the tractor;
FIG. 8 is a perspective view of FIG. 7; and
FIG. 9 is a block diagram of a control system in another example of the invention.

### DESCRIPTION OF EMBODIMENTS

A description will hereinafter be made on an embodiment of the invention with reference to the drawings.

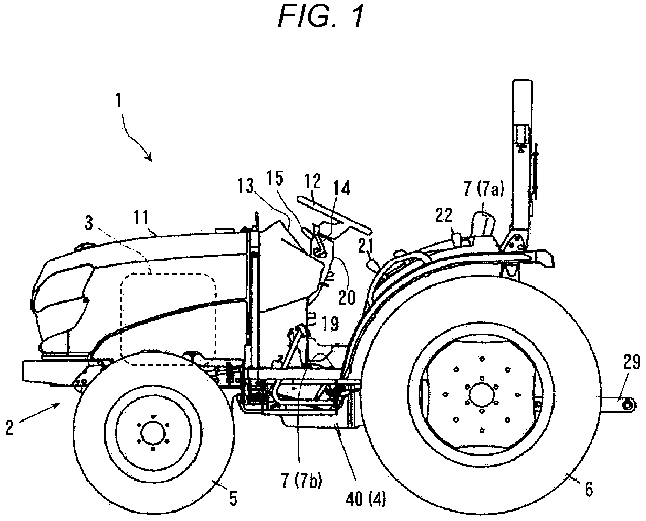

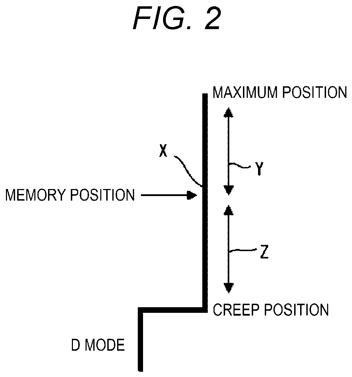

FIGS. 1 and 2 each illustrate a tractor 1 as an example of a work vehicle according to the embodiment of the invention.

This tractor 1 includes a travel body 2 in which devices such as an engine 3, a power transmission apparatus 4, right and left pairs of front wheels 5 and rear wheels 6, and an operator's seat 7 are mounted or provided on an unillustrated support frame or the like. Of these, the engine 3 is covered with a hood cover 11 that is provided openably/closably. The power transmission apparatus 4 includes a hydrostatic continuously variable transmission (a hydrostatic transmission (HST)) 41, a secondary transmission 51, and the like that are arranged in a transmission case 40.

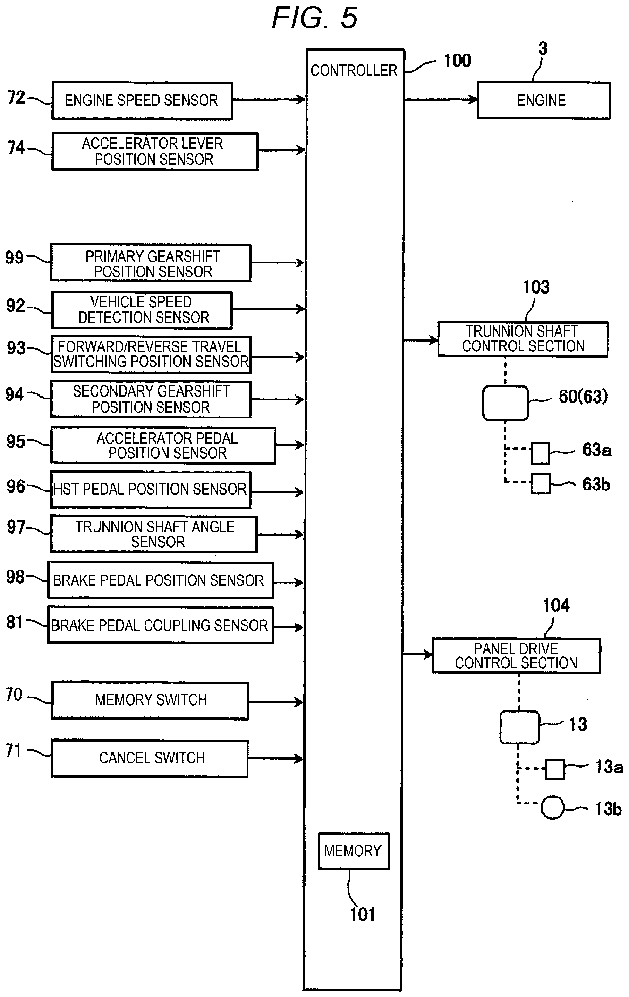

A drive mode of the tractor 1 can be switched between four-wheel drive (4WD), in which rotary power of the engine 3 is transmitted to and drive the right and left front wheels 5 and the right and left rear wheels 6 through the power transmission apparatus 4 and the like, and two-wheel drive (2WD), in which the rotary power of the engine 3 is transmitted to and drive the right and left rear wheels 6. The tractor 1 travels in either one of the drive modes. A travel speed (a vehicle speed) of this travel body 2 is detected by a vehicle speed sensor 92 (FIG. 5), and detection information thereon is transmitted to a controller 100.

Furthermore, the tractor 1 can perform desired work by attaching a work machine, which is not illustrated, such as a rotary tiller, to a rear portion of the travel body 2 via an attachment part such as a lower link 29. The rear portion of the travel body 2 is provided with a PTO shaft 59 for outputting the rotary power of the engine 3 to the attached work machine.

The operator's seat 7 has: a seat section 7a on which a driver is seated; and a step floor section 7b on which the driver places his/her feet when getting in or driving.

A steering wheel 12 is provided in front of the operator's seat 7. The steering wheel 12 is supported by a steering wheel post 20 that is provided to the support frame of the travel body 2, and steers the front wheels 5. A display panel 13 that displays information on steering (a travel speed, an operation state, and the like) for the driver is provided in front of the steering wheel 12.

A forward/reverse travel switching lever 14 is provided to a portion that is located at an upper end of the steering wheel post 20 and a left end under the steering wheel 12. The forward/reverse travel switching lever 14 is operated to switch between forward travel and reverse travel. The forward/reverse travel switching lever 14 has three switching positions that are a forward travel position, a neutral position, and a reverse travel position. A selected position thereof is detected by a forward/reverse travel switching position sensor 93 (FIG. 5), and detection information thereon is transmitted to the controller 100.

An accelerator lever 15 that changes a speed of the engine 3 is provided to a portion that is located in an upper portion of the steering wheel post 20 and at the other end under the steering wheel 12. The accelerator lever 15 is an example of an accelerator operation tool and is used during work travel. The accelerator lever 15 is held at an operated position even when the driver's hand is released therefrom. An operation amount of the accelerator lever 15 is detected by an accelerator lever position sensor 74 (FIG. 5), and detection information thereon is transmitted to the controller 100.

On the step floor section 7b of the operator's seat 7, an accelerator pedal 16, left and right brake pedals 17L, 17R, an HST pedal 18, a clutch pedal 19, and the like are provided to a portion on a right side of the steering wheel post 20. Each of the left and right brake pedals 17L, 17R can be switched between a coupled state where both of the left and right brake pedals 17L, 17R are operated simultaneously by a coupling member and a non-coupled state where each of the left and right brake pedals 17L, 17R can be operated separately. A brake pedal coupling sensor 81 (FIG. 5) is provided to detect the coupled state or the non-coupled state. In the case where an operation of the accelerator pedal 16 is detected from a detection value by an accelerator pedal position sensor 95 (FIG. 5) while the brake pedal coupling sensor 81 detects the non-coupled state, one or both of a lamp and a buzzer are used to notify of and restrict unsafe travel.

The accelerator pedal 16 is another example of the accelerator operation tool and is a depression pedal that is operated to increase the engine speed and thus the vehicle speed of the travel body 2 according to a depression amount thereof. This accelerator pedal 16 is basically used during travel on a road. The depression amount of the accelerator pedal 16 is detected by the accelerator pedal position sensor 95 (FIG. 5), and detection information thereon is transmitted to the controller 100.

The HST pedal 18 is an example of a gearshift operation tool, and is a seesaw-type depression pedal that is operated to change a rotational direction and a rotational speed (number of revolutions) of the rotary power output from the continuously variable transmission 41 including the HST and thus a travel direction (the forward travel or the reverse travel) of the travel body 2 and to adjust the vehicle speed of the travel body 2 according to a depression direction and a depression amount of the HST pedal 18. This HST pedal 18 is mainly used during the work travel.

The HST pedal 18 has: a stop operation position at which the HST pedal 18 can be brought into a stopped state by keeping the entire pedal in a substantially horizontal state; a forward travel operation range where the vehicle speed during the forward travel can be increased or reduced by depressing the entire pedal in a manner to be tilted forward from the stop operation position; and a reverse travel operation range where the vehicle speed during the reverse travel can be increased or reduced by depressing the entire pedal in a manner to be tilted rearward from the stop operation position. A depression direction and a depression amount of the HST pedal 18 are detected by an HST pedal position sensor 96 (FIG. 5), and detection information thereon is transmitted to the controller 100.

A secondary gearshift lever 21, a PTO clutch lever 22, a primary gearshift lever 23, and the like are provided on a left side in an advancing direction of the operator's seat 7.

The secondary gearshift lever 21 is a lever that is operated to select a gear stage (a vehicle speed range), such as a low speed, an intermediate speed, or a high speed, of the rotational speed of the rotary power to be transmitted to the secondary transmission 51. Of these gear stages, each of the low speed and the intermediate speed is the vehicle speed range that is suited for travel in a field during the work in the field, and the high speed is the vehicle speed range that is suited for the travel on the road during movement between the fields, or the like. The PTO clutch lever 22 is a lever that is operated to connect/disconnect drive transmission to the PTO shaft 59. The primary gearshift lever 23 is another example of the gearshift operation tool and is a lever to shift the gear stage by operating a trunnion shaft 47 of the continuously variable transmission **41.**

A selected operation position of the secondary gearshift lever 21 is detected by a secondary gearshift position sensor 94 (FIG. 5), and detection information thereon is transmitted to the controller 100. A selected operation position of the primary gearshift lever 23 is detected by a primary gearshift position sensor 99 (FIG. 5), and detection information thereon is transmitted to the controller 100.

As illustrated in FIG. 2, a position lever 24 for lifting/lowering the work machine, an adjustment panel 25, and the like are provided on a right side in the advancing direction of the operator's seat 7.

The position lever 24 is an operation lever that adjusts a height of the work machine when the work machine is lifted or lowered. The adjustment panel 25 is a component to which a dial, a switch, or the like is arranged to set a necessary adjustment for partial movement of the tractor 1.

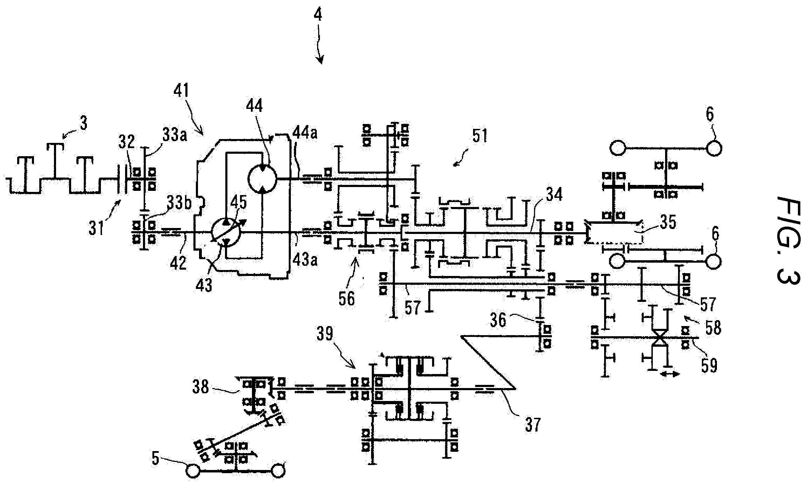

As illustrated in FIG. 3, the power transmission apparatus 4 is configured that rotary power of an output shaft of the engine 3 is first transmitted to an input shaft 32 of the transmission case 40 via a main clutch 31, is increased in speed by speed increasing gears 33a, 33b, and is thereafter transmitted to an input shaft 42 of the continuously variable transmission 41. The main clutch 31 is actuated by presence of a depression operation of the clutch pedal 19.

The continuously variable transmission 41 is a device to which the HST is applied and which is integrated by combining a hydraulic pump 43 and a hydraulic motor 44.

The hydraulic pump 43 is a hydraulic pump of a variable displacement type, is actuated by the rotary power of the engine 3 input through the input shaft 42, and adjusts a discharge state (a direction and a flow rate (including zero)) of hydraulic oil to be delivered to the hydraulic motor 44 by changing an inclination angle of a swash plate 45 in the pump. The hydraulic motor 44 is a hydraulic motor of a fixed displacement type, for example, and causes a motor output shaft 44a to rotate at a predetermined rotational direction and a predetermined rotational speed (number of revolutions) according to a state of the hydraulic oil that is discharged from the hydraulic pump 43.

As illustrated in FIG. 3, in the power transmission apparatus 4, rotary power of the motor output shaft 44a of the hydraulic motor 44 in the continuously variable transmission 41 is output through the secondary transmission 51 and a drive output shaft 34 and is then transmitted to the right and left rear wheels 6 via a rear-wheel differential gear device 35.

In addition, in the power transmission apparatus 4, when a drive switching device 36 including an engagement gear is switched to the four-wheel drive side, the rotary power that is output from the secondary transmission 51 through the drive output shaft 34 is transmitted to a front-wheel relay shaft 37 through the drive switching device 36 and is then also transmitted to the right and left front wheels 5 via a front-wheel differential gear device 39 and a front-wheel speed increasing gear 38. The rotary power, the speed of which is increased to be higher than that for the rear wheels 6, is transmitted to each of the front wheels 5 only when the front-wheel speed increasing gear 38 is actuated and speed increasing processing is executed. Otherwise, the rotary power at the same rotational speed as that for the rear wheels 6 is transmitted to each of the front wheels 5.

Furthermore, as illustrated in FIG. 3, in the power transmission apparatus 4, a pump output shaft 43a that rotates in a similar manner to the input shaft 42 is provided to the hydraulic pump 43 in the continuously variable transmission 41. In this way, in the power transmission apparatus 4, rotary power of the pump output shaft 43a is transmitted to a PTO relay shaft 57 through a PTO forward/reverse clutch 56, and is thereafter transmitted to the PTO shaft 59 through a PTO transmission 58.

In the continuously variable transmission 41, the swash plate 45 in the hydraulic pump 43 is switched to any of a forward output position, a neutral position, and a reverse output position.

In the continuously variable transmission 41, when the swash plate 45 is switched to the forward output position, the rotary power in a forward direction of the hydraulic motor 44 and at the rotational speed corresponding to the inclination angle is output from the motor output shaft 44a. When the swash plate 45 is switched to the reverse output position, the rotary power in a reverse direction of the hydraulic motor 44 and at the rotational speed corresponding to the inclination angle is output from the motor output shaft 44a. In the continuously variable transmission 41, when the swash plate 45 is switched to the neutral position, the hydraulic motor 44 neither causes the motor output shaft 44a to rotate nor output the power.

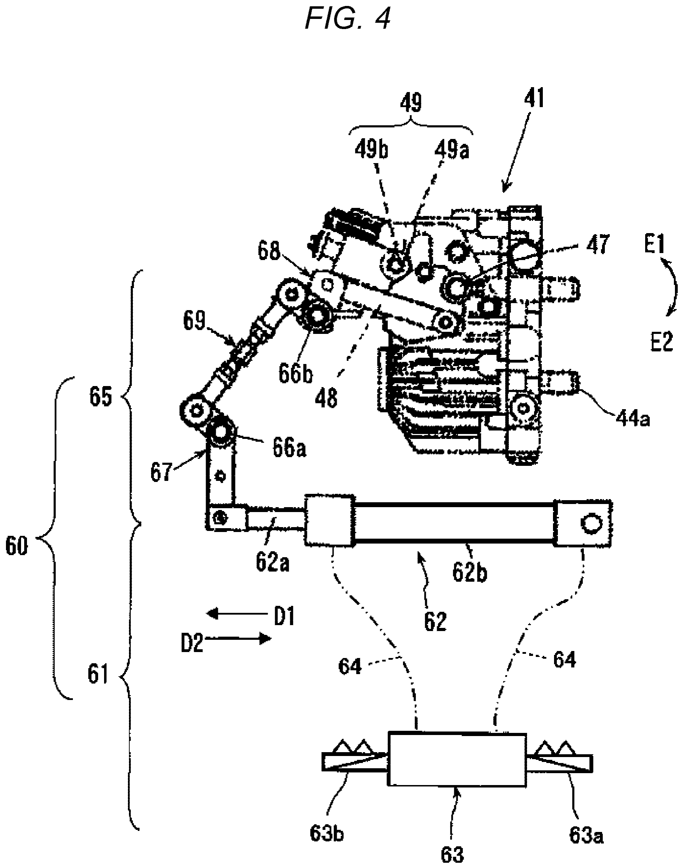

As illustrated in FIG. 4, the continuously variable transmission 41 has the trunnion shaft 47 that rotates to adjust the inclination angle of the swash plate 45 in the hydraulic pump 43. The trunnion shaft 47 rotates via a trunnion arm 48 that moves by actuation of a shaft rotation mechanism 60.

The shaft rotation mechanism 60 has a hydraulic cylinder mechanism 61 as a drive source and a link mechanism 65 that transmits power of the hydraulic cylinder mechanism 61 to the trunnion arm 48.

The hydraulic cylinder mechanism 61 includes a double-acting hydraulic cylinder 62 and a control valve 63 that actuates the hydraulic cylinder 62.

The link mechanism 65 includes: a first swing arm 67, one end of which is connected to a tip of a piston rod 62a of the hydraulic cylinder 62 in the hydraulic cylinder mechanism 61, and which is rotatably supported by a first fixed shaft 66a; a second swing arm 68, one end of which is connected to a rear end of the trunnion arm 48, and which is rotatably supported by a second fixed shaft 66b; and a coupling arm 69 that couples another end of the first swing arm 67 and another end of the second swing arm 68 in a freely rotatable manner.

The control valve 63 supplies hydraulic oil that is delivered from an unillustrated hydraulic pump for a cylinder to one end and another end of a double-acting cylinder section 62b at required timing, and thereby extends or shortens the piston rod 62a. As the control valve 63, an electromagnetic hydraulic proportional valve is applied. The electromagnetic hydraulic proportional valve includes a pair of solenoids 63a, 63b for controlling hydraulic oil supply operation. The one solenoid 63a is actuated to be extended while the other solenoid 63b is actuated to be shortened. Oil feed pumps 64 in FIG. 4 respectively connect one ends of the control valve 63 and the cylinder section 62b and the other ends of the control valve 63 and the cylinder section 62b.

This shaft rotation mechanism 60 is actuated such that, when a piston rod 61a of the hydraulic cylinder mechanism 61 is extended in a direction indicated by an arrow D1 from a position corresponding to the neutral position illustrated in FIG. 4 by the hydraulic oil supply operation of the control valve 63, a force of the extended piston rod 61a is transmitted to the trunnion arm 48 via the link mechanism 65, and the trunnion arm 48 at this time causes the trunnion shaft 47 to rotate in a direction indicated by an arrow E1. In this case, the swash plate 45 in the hydraulic pump 43 moves to be inclined to the forward output position.

The shaft rotation mechanism 60 is also actuated such that, when the piston rod 61a of the hydraulic cylinder mechanism 61 is shortened in a direction indicated by an arrow D2 from a position corresponding to the neutral position by the hydraulic oil supply operation of the control valve 63, the force of the shortened piston rod 61a is transmitted to the trunnion arm 48 via the link mechanism 65, and the trunnion arm 48 at this time causes the trunnion shaft 47 to rotate in a direction indicated by an arrow E2. In this case, the swash plate 45 in the hydraulic pump 43 moves to be inclined to the reverse output position.

Furthermore, as illustrated in FIG. 4, the continuously variable transmission 41 is provided with a neutral holding mechanism 49 to hold the trunnion shaft 47 and the trunnion arm 48, which cause the swash plate 45 to rotate, at the neutral positions.

The neutral holding mechanism 49 has: a cam plate 49a configured to rotate integrally with the trunnion shaft 47 as a support shaft and return to the neutral position; and a roller 49b that is pressed against a peripheral edge cam section formed by a depressed shape of the cam plate 49a when receiving an elastic urging force therefrom. The trunnion shaft 47 is structured that one end thereof is rotatably coupled to a part of the cam plate 49a in this neutral holding mechanism 49.

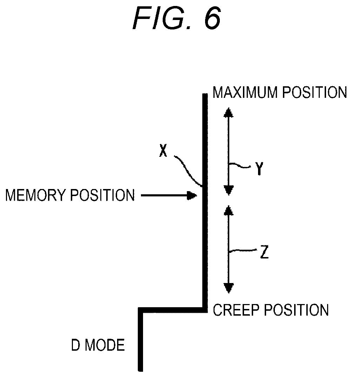

In the continuously variable transmission 41, when the shaft rotation mechanism 60 is not actuated, the trunnion arm 48 is held at the neutral position by action of the neutral holding mechanism 49 (see FIG. 4), and the swash plate 45 thereby returns to the neutral position. A rotation angle of the trunnion shaft 47 is detected by a trunnion shaft angle sensor 97 (FIG. 6) that checks movement of a part of the trunnion arm 48, and detection information thereon is transmitted to the controller 100.

In the continuously variable transmission 41, when an operation amount of the gearshift operation tool, that is, the primary gearshift lever 23 is detected by the primary gearshift position sensor 99, or when the depression direction and the depression amount of the HST pedal 18 are detected by the HST pedal position sensor 96, the controller 100 controls a drive current value that is supplied to each of the solenoids 63a, 63b of the control valve 63 in the shaft rotation mechanism 60 according to the detection value by the sensor 99 or 96. In this way, in the continuously variable transmission 41, the trunnion shaft 47 rotates in a required direction by a required angle corresponding to the depression amount via the trunnion arm 48.

As a result, in the continuously variable transmission 41, the inclination angle of the swash plate 45 in the hydraulic pump 43 is changed appropriately in conjunction with the rotation of the trunnion shaft 47, and the direction and the flow rate of the hydraulic oil discharged from the hydraulic pump 43 to the hydraulic motor 44 are adjusted. Thus, the rotary power, which rotates in the required direction and is changed to the required rotational speed (the number of revolutions) in a stepless manner, is output from the hydraulic motor 44 through the motor output shaft 44a.

The adjustment panel 25 is provided with a memory switch 70. When this memory switch 70 is turned ON, together with this ON signal, the detection value by the primary gearshift position sensor 99 during turning ON is transmitted to the controller 100. With input of the ON signal of the memory switch 70, the controller 100 sets a high-speed restriction mode S.

When the high-speed restriction mode S is set, a memory 101 of the controller 100 inputs and stores the detection value by each of the primary gearshift position sensor 99 and the HST pedal position sensor 96. Then, in the high-speed restriction mode S, the gearshift to the high-speed side, which is based on a moving operation of the primary gearshift lever 23, and the gearshift to the high-speed side by depressing the HST pedal 18 are disabled. That is, it is configured to disable the gearshift to a higher-speed range than a stored operation range by the gearshift operation tools 23, 18. More specifically, the rotation angle of the trunnion shaft 47 is adjusted on the basis of the detection value by the primary gearshift position sensor 99 or the HST pedal position sensor 96 at the time when the memory switch 70 is turned ON. In this way, the speed is set. As a result, even when the primary gearshift lever 23 is operated to the high-speed side or the HST pedal 18 is depressed to the high-speed side, the vehicle speed of the tractor 1 can only be increased up to the set speed. Here, as the method for setting the restricted vehicle speed at the time of turning ON the memory switch 70, that is, in regard to whether to adopt the detection value by the primary gearshift position sensor 99 or the HST pedal position sensor 96, the following methods are available. The methods are: a method of prioritizing the primary gearshift position sensor 99; a method of prioritizing the HST pedal position sensor 96; a method for setting the vehicle speed to one of the lower speed and the higher speed corresponding to the detection values; and a method for setting the vehicle speed by using the detection value that is changed immediately before turning ON of the memory switch 70.

Here, it is configured that, in the case where the operation of the primary gearshift lever 23 or the HST pedal 18 to the low-speed side is detected while the high-speed restriction mode S is set, the gearshift position is controlled in a manner to correspond to the operation position.

Accordingly, the gearshift position is controlled to the operation position in the low-speed range, and is restricted at the stored gearshift position in the high-speed range. Thus, it is easy to comprehend a relationship between the operation position and reproduction of the stored gearshift position, which enables safe travel.

When the memory switch 70 is turned ON again while the high-speed restriction mode S is set, the controller 100 attempts to input the detection values by the primary gearshift position sensor 99 and the HST pedal position sensor 96 at this time so as to update the memory. However, in the case where either one of the primary gearshift lever 23 and the HST pedal 18 is located at the higher-speed position than the first set detection position, the controller 100 restricts the input therefrom and does not accept to update the memory. As a result, it is possible to avoid an unexpected speed increase, which is caused by updating the memory, and thus to travel safely.

The high-speed restriction mode S is canceled by using a cancel switch 71 that is disposed near the memory switch 70. When this cancel switch 71 is turned ON, the vehicle speed is changed by the normal operation of the primary gearshift lever 23 or the HST pedal 18. By the way, when the high-speed restriction mode S is canceled, in the case where the position of the primary gearshift lever 23 or the HST pedal 18 is located in the higher-speed range than the speed set in the high-speed restriction mode S, the high-speed restriction continues until the gearshift position of the primary gearshift lever 23 or the HST pedal 18 returns to the gearshift position that is set when the high-speed restriction mode S is set.

With such a configuration, even in the case where the primary gearshift lever 23 or the HST pedal 18 is located at the high-speed position when the high-speed restriction mode S is canceled, it is possible to avoid the unexpected speed increase and thus to travel safely.

FIG. 6 illustrates a gearshift situation of the primary gearshift lever 23 that is configured to be shifted from a maximum position (a maximum speed position) Max to a creep position Min at a minimum speed and to be shifted to a D mode for switching to an accelerator gearshift mode. The position of the primary gearshift lever 23 in the high-speed restriction mode S is set as a memory position X by the memory switch 70. At this time, within a range Y between the memory position X and the maximum position Max in FIG. 6, even when the primary gearshift lever 23 is operated, the trunnion shaft 47 is not actuated from the memory position X, and thus a theoretical vehicle speed is not changed. Meanwhile, within a range Z between the memory position X and the creep position Min in FIG. 6, the trunnion shaft 47 moves according to the operation of the primary gearshift lever 23, and thus the theoretical vehicle speed is changed.

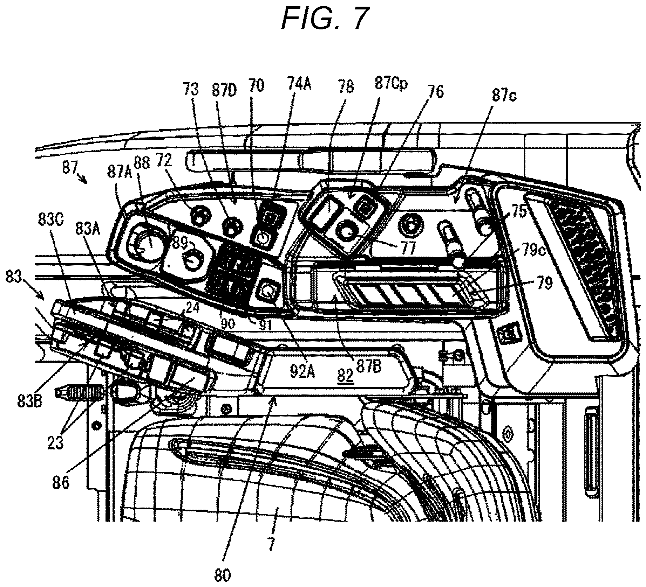

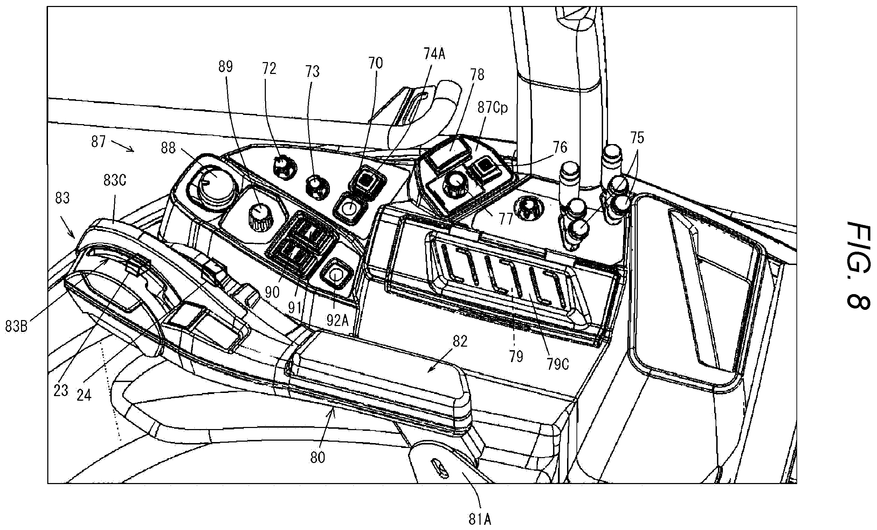

Next, a description will be made on the primary gearshift lever 23 and the memory switch 70 on the basis of an exemplary configuration of an operation section near the operator's seat 7 in a cabin. As illustrated in FIGS. 7 and 8, an armrest 80 is provided in a vertically rotatable manner on the one side (the right side in the illustrated examples) of the operator's seat 7. The armrest 80 is coupled to a bracket member 81A, which is provided near a lateral side of the operator's seat 7, in a freely rotatable manner about a core of a horizontal axis, and is divided into an elbow resting section 82 in a latter half portion and an operation system arrangement section 83 in a front half portion. A cushion material is spread over an upper surface of the elbow resting section 82.

The operation system arrangement section 83 in the front half portion forms a partition section 83C that partitions the operation section into an outer operation section 83A and an inner operation section 83B. The outer operation section 83A is provided with the position lever 24 that can perform a forward/backward operation to lift/lower the work machine, and the inner operation section 83B is provided with the primary gearshift lever 23 as the gearshift operation tool that can perform a forward/backward operation. Of these, when the position lever 24 is tilted forward, the work machine is lowered. When the position lever 24 is tilted backward, the work machine is lifted. The primary gearshift lever 23 is sequentially switched to the low-speed side every time the primary gearshift lever 23 is shifted from the forward tilted side to the backward tilted side, and an accelerator gearshift position is set at a backward tilted end. When being set at the accelerator gearshift position, the primary gearshift lever 23 switches the gear stage to a predetermined gear stage by a calculation that is based on the detected accelerator pedal depression amount and the detected engine speed.

A vehicle speed restriction switch 86 is arranged behind the primary gearshift lever 23. When this switch 86 is turned ON, the gear stage is calculated such that the detected vehicle speed does not exceed 15 km/h, for example, and the gear stage is then automatically switched to the predetermined low-speed side.

The driving worker touches the partition section 83C with his/her right hand, touches the position lever 24 on the outer side of the partition section 83C for a lifting/lowering operation of the work machine, and touches the primary gearshift lever 23 on the inner side of the partition section 83C for the gearshift operation. In this way, the presence of the partition section 83C allows the driving worker to easily touch and operate the predetermined operation lever without visual recognition. A top portion of the curved partition section 83C is molded to be higher than operation sections of the position lever 24 and the primary gearshift lever 23.

Next, a description will be made on a configuration of an operation panel 87 that is formed in an upper portion of a right fender near the armrest 80. The operation panel 87 on an upper surface of the fender is divided into plural areas. More specifically, the operation panel 87 includes: a first area 87A that is near the outer operation section 83A of the armrest 80; a second area 87B that is arranged behind the first area 87A and is inclined from a slightly high top edge; a third area 87C whose front portion is formed in an inclined convex shape 87Cp between the top edge of the second area 87B and an inner wall of an intermediate pillar; a fourth area 87D that is arranged in front of and is slightly lower than the inclined convex shape 87Cp of the third area 87C; and the like.

In the first area 87A, a PTO switch 88, a tillage depth adjustment dial 89, an engine speed memory 90, a memory adjustment switch 91, an automatic clutch switch 92A, and the like are disposed. The PTO switch 88 manually operates the PTO shaft 59 for the rotation or the stop thereof, and the tillage depth adjustment dial 89 sets a tillage depth in an automatic tillage depth control mode. A seesaw switch is adopted for the engine speed memory 90 to change the engine speed to one of the preset two engine speeds with a one-touch operation, and the engine speed memory 90 is also used to interrupt or resume the work such as during a turn. A seesaw switch is also adopted for the memory adjustment switch 91, which enables an appropriate increase/reduction of the engine speed set in the engine speed memory 90. The automatic clutch switch 92A can turn on an automatic clutch brake stop function, which allows to decelerate and stop the vehicle body by simply depressing the brake pedal and allows to start the vehicle body by simply releasing the brake pedal after the vehicle body is stopped.

The first area 87A is provided at a position that is substantially the same height as the elbow resting section 82 of the armrest 80.

In the inclined second area 87B, an electro-hydraulic operation box 79 that can be opened/closed with a cover 79C. The electro-hydraulic operation box 79 includes: a travel switch to switch among 2WD, 4WD, and the like; a work setting switch for reverse travel-linked lifting, turn-linked lifting, turn-linked braking, and the like; and another setting switch for automatic switching between position/draft selections and for horizontal switching such as an absolute level, making the machine body parallel, the inclination of the machine body. This second area 87B is set at a slightly higher position than the first area 87A.

In the third **area** 87C, two outer hydraulic operation levers 75, 75 are arranged. In addition, various switches that are associated with an automatic straight travel control function in an automatic steering mode, which will be described below, are arranged on the inclined surface of the inclined convex shape 87Cp in front. For example, a home screen retrieval switch 76, a screen switching switch 77, and a position correction switch 78 for a sub-monitor, which is not illustrated, are provided.

In the fourth area 87D, a PTO switching switch 72, a mode switching dial 73, the memory switch 70, and a work setting retrieval switch 74A are provided. Of these, the PTO switching switch 72 can selectively set an automatic PTO rotation mode or a manual mode. In the automatic PTO rotation mode, the rotation of the PTO shaft 59 is automatically stopped when the work machine starts lifted, and the PTO shaft 59 is made to rotate again when the work machine is lowered to a predetermined level. In the manual mode, neither of the above is executed. The mode switching dial 73 corresponds to various switches in the electro-hydraulic operation box 79, and can appropriately set a drive state and each of various control settings to an appropriate state with one touch in the case where the work machine is switched between tillage work and road travel.

The memory switch 70 sets the high-speed restriction mode S. Then, a function is added for each of a case where the switch 70 is pressed for a long time and a case where the switch 70 is pressed for a short time. In the case where the switch 70 is pressed for the long time, the operation position of the primary gearshift lever 23, that is, the detection value by the primary gearshift position sensor 99 is stored. It is configured that the high-speed restriction mode S is set with short pressing and such a mode S can be canceled with a subsequent short pressing operation. With such a configuration, the independent cancel switch 71 can be omitted.

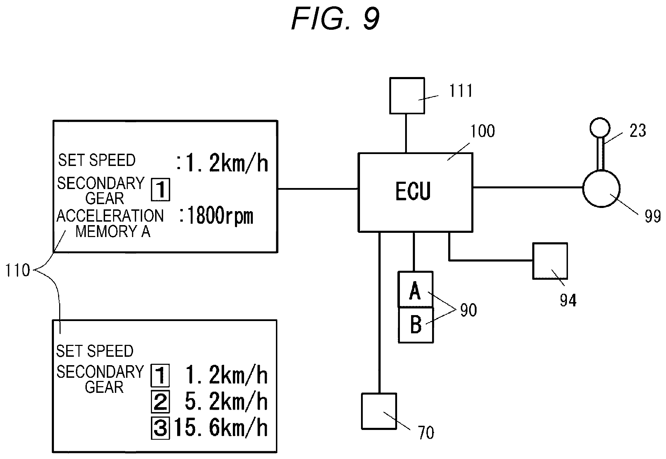

Next, a description will be made on a configuration to generate an appropriate work speed by a combination of any of the position sensor 99 of the primary gearshift lever 23, the engine speed memory 90, the position sensor 94 of the secondary gearshift lever 21, and the like. In FIG. 9, the controller 100 is configured to receive a signal from each of the primary gearshift position sensor 99 of the primary gearshift lever 23, the secondary gearshift position sensor 94 of the secondary gearshift lever 21, the engine speed memory 90, and the memory switch 70 and to switch a liquid-crystal display section 110 between a screen that displays the set speed, the secondary gear stage, and selection information of the engine speed memory 90 and a screen that displays the set speed for each of the secondary gear stages. A display switching switch 111 switches the screen display that is set for each of the secondary gear stages. The engine speed memory 90 includes switches (two types of A, B in the illustrated example), each of which can set respective one of the plural engine speeds for different types of the work. The liquid-crystal display section 110 is configured to display the set speed that is calculated by using this engine speed setting and the detection value by the primary gearshift position sensor 99 for the primary gearshift lever 23. Since the set speed varies by the gearshift position of the secondary gearshift lever 21, it is configured that the set speed is calculated in a manner to correspond to the detection value by the secondary gearshift position sensor 94 and that the secondary gearshift position and the set speed can be displayed in association with each other on the liquid-crystal display section 110.

In the embodiment, the description has been made on the HST as the transmission. However, the transmission may be another continuously variable transmission such as a hydromechanical continuously variable transmission (HMT).

## Claims

1. A work vehicle comprising:
a transmission (41) that changes a gear stage on the basis of an operation of a gearshift operation tool (18, 23); and
a memory switch (70) that detects an operation position of the gearshift operation tool (18, 23) and stores the operation position in a controller (100),
**characterized in that**
when the operation position is stored by using the memory switch (70), with respect to a vehicle speed, a gearshift operation of the gearshift operation tool (18, 23) to a higher-speed side than the operation position stored by using the memory switch (70) is disabled, and the gearshift operation of the gearshift operation tool (18, 23) to a lower-speed side than the operation position stored by using the memory switch (70) is enabled.

2. The work vehicle according to claim 1 configured that
in the case where the memory switch (70) is operated again in a state where the operation position is stored by using the memory switch (70), and a gearshift position of the gearshift operation tool (18, 23) is located at a lower-speed position than the stored operation position, the controller (100) inputs the gearshift position of the gearshift operation tool (18, 23) at this time and updates memory, and
the controller (100) does not accept update of the memory when the gearshift position of the gearshift operation tool (18, 23) is located at a higher-speed position than the stored operation position.

3. The work vehicle according to claim 1 or claim 2 configured to:
cancel the operation position, which is stored by using the memory switch (70), by an operation of a cancel switch (71); and
keep the gearshift position of the gearshift operation tool (18, 23) at the operation position stored by using the memory switch (70) in the case where the gearshift position of the gearshift operation tool (18, 23) is located at the higher-speed position than the operation position stored by using the memory switch (70) during the operation of cancel switch (71).

4. The work vehicle according to claim 1 or claim 2 further comprising:
an engine speed memory (90) that sets an engine speed; and
a display section (110) that displays a set speed calculated from a set engine speed and the gearshift position of the gearshift operation tool (18, 23).

## Patentansprüche

1. Ein Arbeitsfahrzeug mit
einem Getriebe (41), das einen Gang auf der Grundlage einer Betätigung eines Schaltbetätigungswerkzeugs (18, 23) wechselt; und
einem Speicherschalter (70), der eine Betätigungsposition des Schaltbetätigungswerkzeugs (18, 23) erfasst und die Betätigungsposition in einer Steuereinheit (100) speichert,
**dadurch gekennzeichnet, dass**,
wenn die Betätigungsposition unter Verwendung des Speicherschalters (70) gespeichert wird, in Bezug auf eine Fahrzeuggeschwindigkeit ein Schaltvorgang des Schaltbetätigungswerkzeugs (18, 23) zu einer höheren Geschwindigkeit hin als die unter Verwendung des Speicherschalters (70) gespeicherten Betätigungsposition deaktiviert wird und der Schaltvorgang des Schaltbetätigungswerkzeugs (18, 23) zu einer niedrigeren Geschwindigkeit hin als die mit dem Speicherschalter (70) gespeicherten Betriebsposition aktiviert wird.

2. Das Arbeitsfahrzeug gemäß Anspruch 1, das eingerichtet ist, dass,
in dem Fall, in dem der Speicherschalter (70) erneut in einem Zustand betätigt wird, in dem die Betriebsposition unter Verwendung des Speicherschalters (70) gespeichert ist, und eine Schaltposition des Schaltbetätigungswerkzeugs (18, 23) sich an einer Position niedrigerer Geschwindigkeit als der gespeicherten Betriebsposition befindet, die Steuereinheit (100) die Schaltposition des Schaltbetätigungswerkzeugs (18, 23) zu diesem Zeitpunkt eingibt und den Speicher aktualisiert, und
die Steuereinheit (100) keine Aktualisierung des Speichers akzeptiert, wenn sich die Schaltposition des Schaltbetätigungswerkzeugs (18, 23) an einer Position höherer Geschwindigkeit als der gespeicherten Betätigungsposition befindet.

3. Das Arbeitsfahrzeug gemäß Anspruch 1 oder Anspruch 2, das eingerichtet ist, um
die unter Verwendung des Speicherschalters (70) gespeicherte Betriebsposition durch Betätigen eines Löschschalters (71) zu löschen; und
die Schaltposition des Schaltbetätigungswerkzeugs (18, 23) in der unter Verwendung des Speicherschalters (70) gespeicherten Betriebsposition zu halten, wenn sich die Schaltposition des Schaltbetätigungswerkzeugs (18, 23) während der Betätigung des Löschschalters (71) in der Position höherer Geschwindigkeit als der unter Verwendung des Speicherschalters (70) gespeicherten Betriebsposition befindet.

4. Das Arbeitsfahrzeug gemäß Anspruch 1 oder Anspruch 2, das ferner Folgendes umfasst:
einen Motordrehzahlspeicher (90), der eine Motordrehzahl einstellt; und
einen Anzeigebereich (110), der eine eingestellte Geschwindigkeit anzeigt, die aus einer eingestellten Motordrehzahl und der Schaltposition des Schaltbetätigungswerkzeugs (18, 23) berechnet wurde.

## Revendications

1. Véhicule de travail comprenant :
une transmission (41) qui change de rapport d'étape de transmission en fonction de l'actionnement d'un outil d'opération de changement de vitesse (18, 23) ; et
un commutateur à mémoire (70) qui détecte une position d'actionnement de l'outil d'opération de changement de vitesse (18, 23) et enregistre la position d'actionnement dans un contrôleur (100),
**caractérisé en ce que**,
lorsque la position d'actionnement est mémorisée en utilisant le commutateur à mémoire (70), par rapport à une vitesse du véhicule, un actionnement de changement de vitesse de l'outil d'opération de changement de vitesse (18, 23) vers un côté à vitesse plus élevée que la position d'actionnement mémorisée à l'aide du commutateur à mémoire (70) est désactivée, et la commande de changement de vitesse de l'outil d'opération de changement de vitesse (18, 23) vers un côté à vitesse inférieure à la position d'actionnement enregistrée à l'aide du commutateur de mémoire (70) est activée.

2. Véhicule de travail selon la revendication 1 configuré de telle sorte que,
dans le cas où le commutateur à mémoire (70) est actionné à nouveau dans un état où la position d'actionnement est enregistrée à l'aide du commutateur de mémoire (70), et une position de changement de vitesse de l'outil d'opération de changement de vitesse (18, 23) se trouve à une position de vitesse inférieure à la position d'actionnement enregistrée, le contrôleur (100) entre la position de changement de vitesse de l'outil d'opération de changement de vitesse (18, 23) à ce moment-là et met à jour une mémoire, et
le contrôleur (100) n'accepte pas la mise à jour de la mémoire lorsque la position de changement de vitesse de l'outil de changement de vitesse (18, 23) se trouve à une position de vitesse supérieure à la position d'actionnement enregistrée.

3. Véhicule de travail selon la revendication 1 ou la revendication 2 configuré pour :
annuler la position d'actionnement, qui est enregistrée en utilisant le - commutateur de mémoire (70), par une opération d'un commutateur d'annulation (71) ; et
maintenir la position de changement de vitesse de l'outil d'opération de changement de vitesse (18, 23) à la position d'actionnement enregistrée en utilisant le commutateur de mémoire (70) dans le cas où la position de changement de vitesse de l'outil d'opération de changement de vitesse (18, 23) se trouve à la position de vitesse supérieure à la position d'actionnement enregistrée en utilisant le commutateur de mémoire (70) pendant l'actionnement du commutateur d'annulation (71).

4. Véhicule de travail selon la revendication 1 ou la revendication 2, comprenant en outre :
une mémoire de la vitesse du moteur (90) qui définit une vitesse du moteur ; et
une section d'affichage (110) qui affiche une vitesse définie calculée à partir d'une vitesse du moteur définie et de la position de changement de vitesse de l'outil d'opération de changement de vitesse (18, 23).
